# EUROPÄISCHE PATENTSCHRIFT

(11) **EP 3 243 379 B1**
(45) Veröffentlichungstag und Bekanntmachung des Hinweises auf die Patenterteilung: **04.07.2018**
(21) Anmeldenummer: 16169307.2
(22) Anmeldetag: 12.05.2016
(51) Int. Cl.: A01K 13/00, A01L 3/00

(54) **VERSCHLUSSVERBUNDSYSTEM FÜR EINEN FUSSSCHUTZ**
CLOSURE COMPOSITE SYSTEM FOR A FOOT PROTECTOR
SYSTÈME COMPOSITE DE FERMETURE POUR UNE PROTECTION DE PIED

(43) Veröffentlichungstag der Anmeldung: 15.11.2017
(73) Patentinhaber: Megasus Horsetech GmbH, 8280 Fürstenfeld (AT)
(72) Erfinder: Forstner, Louisa, 8280 Fürstenfeld (AT); Forstner, Karl, 8280 Fürstenfeld (AT)
(74) Vertreter: Schwarz & Partner Patentanwälte OG

(56) Entgegenhaltungen:
- WO-A1-2010/039901
- DE-A1- 10 346 480
- DE-A1- 19 753 120
- DE-A1- 19 800 695
- US-A- 5 692 569

## Beschreibung

Die Erfindung betrifft ein Verschlussverbundsystem zum Befestigen eines Fußschutzes an einer Hornkapsel eines Tieres mit Befestigungsmitteln, die an einer Hornkapselwand der Hornkapsel anbringbar sind, und mit Haltemitteln, die am Fußschutz angebracht sind. Siehe z.B. DE 10346480 A1. Einhufer, wie beispielsweise Pferd oder Esel, und Paarhufer, sogenannte Klauentiere wie beispielsweise Rind oder Schaf, weisen am untersten Teil der Gliedmaßen aus Hornkapseln gebildete Hufe oder Klauen auf. Wie Krallen und Fingernägel werden diese im Gebrauch abgenutzt und wachsen deshalb ständig nach. Da derartige Tiere heute üblicherweise als Haus- oder Nutztiere gehalten werden, können sie ihr natürliches Bewegungsverhalten häufig nicht mehr ausleben, wodurch Wachstum und Abrieb der Hufe und Klauen oft nicht mehr übereinstimmen. Um Erkrankungen der Hufe oder Klauen zu verhindern, müssen diese, je nach Beanspruchung, in regelmäßigen Abständen ausgeschnitten und bei starker Beanspruchung der Hornkapsel gegebenenfalls mit einem Fußschutz versehen werden.

Besonders bei Einhufern, die vermehrt auf hartem Untergrund, beispielweise auf geteerten Straßen, bewegt werden, ist das Anbringen eines Fußschutzes weit verbreitet. Bei Pferd, Esel und Maultier wird hierbei meist ein Hufeisen aus Metall genagelt, welche jedoch aufgrund mangelnder Stoßdämpfung und starrer Fixierung des beweglichen Tastorgans "Huf" erhebliche Nachteile für den Körper des Tieres mit sich bringen können. Ein über acht Wochen durch Aufnageln permanent aufgebrachter Hufschutz hat zudem den Nachteil, dass das, in der Beschlagsperiode um zwei bis vier Zentimeter nachwachsende Hufhorn sich nicht auf natürlichem Wege abreiben oder ausgeschnitten werden kann, sodass der an Umfang zunehmende Huf in seiner engen Ausgangsstellung fixiert bleibt. Eine falsche Fußstellung und damit einhergehende Schädigungen an Knochen, Sehnen und Bändern können die Folge sein.

Aufgrund der stoßdämpfenden Eigenschaften und der geringeren Verletzungsgefahr kamen in den letzten Jahren insbesondere bei Freizeitpferden vermehrt Kunststoffbeschläge zum Einsatz. Ein temporärer nagelloser Hufschutz, der die natürlichen Bewegungen des Hufs zulässt, wäre die ideale Lösung um die Gesundheit des Tieres zu erhalten. Lösungen in Form eines anschnallbaren oder anklebbaren Hufschuhs gibt es bereits auf dem Markt, mit dem Nachteil, dass diese bisher bis über das Fesselgelenk geführt werden mussten, was zu Scheuerstellen und, aufgrund der ungenauen Anpassbarkeit, immer wieder zum Verlust des Hufschutzes bei schnelleren Gangarten führte. Auch ist der Einsatz von Hufschuhen, die über die Fessel geführt werden, im Sportbereich nicht möglich, da diese das schnelle Drehen der Hufe auf dem Boden bei hoher Geschwindigkeit nicht zulassen.

Ein Hufschuh muss nach der Nutzung des Tieres durch den Reiter wieder entfernt werden, da das Pferdebein im Hufschuh schwitzt und sich aufreibt. Aus diesem Grund sollte ein Hufschuh ausschließlich auf die Befestigung an der Hornkapsel beschränkt und auf Wunsch jederzeit wieder abnehmbar sein. Im Gegensatz hierzu sollte es der Hufschuh zusätzlich ermöglichen, diesen bei Bedarf über mehrere Tage am Huf zu belassen ohne Gefahr zu laufen, dass dieser verloren geht oder, dass Scheuerstellen auftreten.

Das Dokument DE 197 42 274 A1 offenbart einen derartigen temporären Hufschutz aus Kunststoff, der in Form eines Hufschuhs mittels Klettverschluss an der Hornkapsel befestigt wird. Nachteilig ist an diesem Hufschutz die mangelnde Anpassbarkeit an den Huf, so dass es zu Spielräumen zwischen Huf und Hufschutz kommt, was für die Haltbarkeit des Hufschutzes am Huf abträglich ist. Auch wenn der Hufschuh exakt an die Hufform eines einzelnen Tieres angepasst wird, was in Anschaffung und Herstellung sehr aufwändig und kostenintensiv wäre, ist die Anpassung bei diesem Hufschutz immer nur eine Momentaufnahme, da der Huf wächst und sich damit in einem fortwährenden Wachstumsprozess befindet. Das Dokument offenbart einen weiteren Hufschutz, der bis zu einem gewissen Grad an den Huf eines Pferdes anpassbar ist. Allerdings hat sich dieser Hufschutz in der Praxis nicht zuverlässig erwiesen.

Das Dokument DE 198 00 695 A1 offenbart eine Vorrichtung zum Befestigen eines Hufschutzes an einer Hornkapsel eines Tieres. Nachteilig ist hierbei unter anderem, dass der Hufschutz bereits passgenau auf den Huf zugeschnitten und mechanisch "steif sein muss, da sonst keine zuverlässige Verbindung zwischen Hufschutz und Hornkapsel ermöglicht wird.

Der Erfindung liegt die Aufgabe zugrunde einen temporären Fußschutz für unterschiedliche Hufe und Klauen zu ermöglichen, der eine zuverlässige Verbindung zwischen Fußschutz und Hornkapsel ermöglicht.

Erfindungsgemäß wird diese Aufgabenstellung dadurch gelöst, dass der Fußschutz eine Sohlenplatte und zumindest zwei Anpasselemente mit jeweils zumindest einem Schenkel und einer Grundplatte aufweist, wobei jeder Schenkel mittels der Grundplatte, die in einer nach oben offenen Sohlenplattenausnehmung der Sohlenplatte verschiebbar und von der Sohlenplatte lösbar ausgebildet ist, im Wesentlichen radial, relativ zur Hornkapselwand verschiebbar ausgebildet ist und eines der Haltemittel aufweist, die mit den Befestigungsmitteln scherfest und lösbar verbindbar ausgebildet sind.

Hierdurch ist der Vorteil erhalten, dass der Fußschutz beim Anlegen schnell und einfach manuell an einen Huf oder eine Klaue angepasst werden kann, wobei sofort eine scherfeste und zuverlässige Verbindung zwischen Fußschutz und Hornkapsel ausgebildet wird. Hierbei ist die Verbindung zwischen Befestigungsmittel und Hornkapselwand stärker ausgebildet als die Verbindung zwischen Befestigungsmittel und Haltemittel. Nach Gebrauch des Fußschutzes kann dieser ebenso schnell und einfach manuell abgenommen werden, wobei die Befestigungsmittel an der Hornkapsel verbleiben können.

Durch die zuverlässige Verbindung des erfindungsgemäßen Verschlussverbundsystems wird es erstmals möglich, einen temporären Fußschutz passgenau lediglich an der Hornkapselwand, vorzugsweise lediglich an einer Hornkapselseitenwand, des Hufs zu befestigen und wieder zu lösen. Die Anpasselemente pressen den Fußschutz auf die Hornkapsel, sodass vorteilhafterweise eine scherfeste und lösbare Verbindung ermöglicht wird. Besonders vorteilhaft ist hierbei, dass die Befestigungsmittel für die Hornkapselwand beschädigungsfrei an der Hornkapselwand befestigt werden. Es erfolgt somit kein Eindringen eines Nagels oder einer Schraube in die Hornkapselwand, die die Hornkapselwand beschädigen würde.

Vorteilhafterweise weisen die Haltemittel und/oder die Befestigungsmittel eine formschlüssige Oberflächenstruktur, vorzugsweise eine pilzkopfartige oder eine haken- und schlaufenartige Oberflächenstruktur, beispielsweise eine Oberflächenstruktur gemäß 3M™ Dual Lock™, 3M™ DuoTec™ oder VELCRO® Plastic Hooks, auf. Eine formschlüssige Verbindung zweier derartiger Oberflächen ist manuell lösbar verbindbar und weist gleichzeitig eine besonders hohe Scherfestigkeit auf.

Besonders vorteilhaft sind die Haltemittel mit einer derartigen Oberflächenstruktur direkt in eine, den Befestigungsmitteln gegenüberliegende Oberfläche der Schenkel integriert ausgebildet. Hierdurch wird die Herstellung der Anpasselemente vereinfacht und die Haltemittel müssen nicht extra auf die Schenkel aufgebracht werden.

Die Haltemittel und/oder die Befestigungsmittel können vorteilhafterweise auch aus einem Band, vorzugsweise einem einseitigen Klebeband, das die formschlüssige Oberflächenstruktur aufweist, ausgebildet sein. Hierdurch können die Haltemittel und/oder die Befestigungsmittel einfach und schnell ausgetauscht werden.

Besonders vorteilhaft ist die Oberflächenstruktur als Mikrostruktur ausgebildet. Mikrostrukturen ermöglichen durch ihre besonderen Oberflächeneigenschaften neuartige Wirkungen und Effekte, beispielsweise besonders tragfähige Verbindungen oder selbstreinigende Oberflächen.

In einer weiteren vorteilhaften Ausgestaltung eines erfindungsgemäßen Verschlussverbundsystems sind die Haltemittel und die Befestigungsmittel als Einrastverbindung, vorzugsweise als Druckknopfverschluss oder als Druckverschlussschiene oder in Form einer Steck- oder Verschlussschnalle, ausgebildet. Diese Einrastverbindungen haben den Vorteil, dass die Verbindung vorgespannt werden kann, so dass auch bei Tieren mit schwierigem Auffußverhalten (Drehen des Hufs) der Fußschutz passgenau am Huf verbleibt.

In einer weiteren vorteilhaften Ausgestaltung eines erfindungsgemäßen Verschlussverbundsystems sind die Haltemittel und die Befestigungsmittel als lösbarer Kabelbinderverschluss ausgebildet, wobei vorzugsweise das Befestigungsmittel als Kabelbinderkopf und das Haltemittel als Kabelbinderzunge ausgebildet ist. Hierdurch ist der Vorteil gegeben, dass die Verbindung vorgespannt werden kann, so dass auch bei Tieren mit schwierigem Auffußverhalten (Drehen des Hufs) der Fußschutz passgenau am Huf verbleibt.

In einer weiteren vorteilhaften Ausgestaltung eines erfindungsgemäßen Verschlussverbundsystems sind die Haltemittel und die Befestigungsmittel am Schenkel angebracht, wobei die Befestigungsmittel eine der Hornkapselwand zugewandte Saugnapfstruktur oder Mikrostruktur aufweisen, die zur Ausbildung einer scherfesten und lösbaren Verbindung mit der Hornkapselwand ausgebildet ist, und wobei die Verbindung zwischen Befestigungsmittel und Haltemittel stärker ist als die Verbindung zwischen Befestigungsmittel und Hornkapselwand. Hierdurch ist der Vorteil erhalten, dass kein Befestigungsmittel an der Hornkapsel verbleiben muss. Besonders vorteilhaft sind die Haltemittel und die Befestigungsmittel in eine der Hornkapselwand gegenüberliegende Oberfläche der Schenkel integriert ausgebildet.

Besonders vorteilhaft weisen die Anpasselemente jeweils eine Grundplatte auf, über welche Grundplatte sie mit dem Fußschutz verbunden sind, wobei die Grundplatte lösbar vom Fußschutz ausgebildet ist. Hierdurch können beispielsweise unterschiedliche Anpasselemente mit unterschiedlichen Haltemitteln, die mit dem jeweiligen Befestigungsmittel formschlüssig und/ oder andersartig, beispielsweise kraftschlüssig und/ oder stoffschlüssig, kompatibel sind, ausgetauscht werden. Weiters können kaputte oder zu reinigende Anpasselemente beziehungsweise Haltemittel einfach abgenommen und/oder ausgetauscht werden.

Vorteilhaft bestehen die Anpasselemente und/oder der Fußschutz zumindest teilweise aus Metall, insbesondere aus rostfreiem Leichtbaustahl oder Aluminium, Gummi, Kunststoff, faserverstärktem Kunststoff oder aus Carbon, was dem Fußschutz die nötige Stabilität verleiht. Beispielsweise können durch eine Kunststoffsohle die stoßdämpfenden Eigenschaften verbessert werden, und Carbon weist eine besonders hohe Festigkeit bei verhältnismäßig geringer Dichte auf

In einer vorteilhaften Weiterbildung eines erfindungsgemäßen Verschlussverbundsystems sind die Schenkel der Anpasselemente über ein Scharniergelenk oder ein Filmscharnier mit dem Fußschutz oder mit der Grundplatte der Anpasselemente biegbar verbunden. Hierdurch können die Anpasselemente und die Haltemittel an die Hornkapselwand angepasst werden.

Im Folgenden wird das erfindungsgemäße Verschlussverbundsystem in nicht einschränkender Weise anhand von, in den Zeichnungen dargestellten beispielhaften Ausgestaltungen näher erläutert.
Figur 1 zeigt in einer perspektivischen Ansicht von oben einen Fußschutz gemäß einer ersten Ausgestaltung der Erfindung.
Figur 2 zeigt in einer perspektivischen Ansicht von unten den Fußschutz gemäß Figur 1.
Figur 3 zeigt in einer Ansicht von hinten den Fußschutz gemäß Figur 1.
Figur 4 zeigt in einer Seitenansicht den Fußschutz gemäß Figur 1.
Figur 5 zeigt in einer Ansicht von vorne den Fußschutz gemäß Figur 1.
Figur 6 zeigt in einer perspektivischen Ansicht von oben den Fußschutz gemäß Figur 1, wobei fünf der sechs Anpasselemente gelöst und entfernt sind.
Figur 7 zeigt in vergrößerter perspektivischer Ansicht einen Ausschnitt A aus Figur 6.
Figur 8 zeigt entsprechend Figur 7 einen Ausschnitt eines Fußschutzes gemäß einer zweiten Ausgestaltung der Erfindung.
Figur 9 zeigt entsprechend Figur 7 einen Ausschnitt eines Fußschutzes gemäß einer dritten Ausgestaltung der Erfindung.
Figur 10 zeigt entsprechend Figur 7 einen Ausschnitt eines Fußschutzes gemäß einer weiteren Ausgestaltung der Erfindung.
Figur 11 zeigt schematisch ein erfindungsgemäßes Verschlussverbundsystem gemäß der ersten Ausgestaltung der Erfindung.
Figur 12 zeigt schematisch ein erfindungsgemäßes Verschlussverbundsystem gemäß der zweiten Ausgestaltung der Erfindung.
Figur 13 zeigt schematisch ein erfindungsgemäßes Verschlussverbundsystem gemäß der weiteren Ausgestaltung der Erfindung.

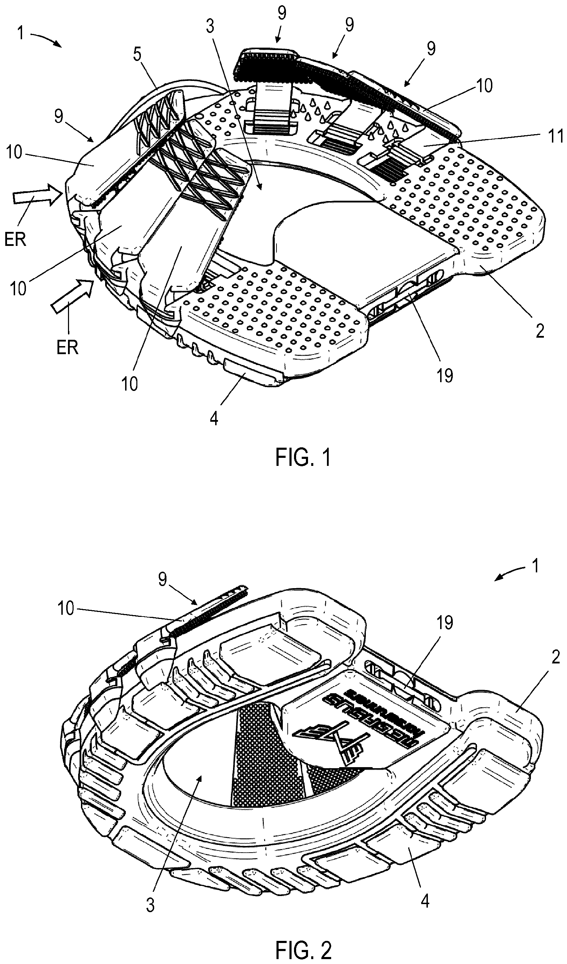

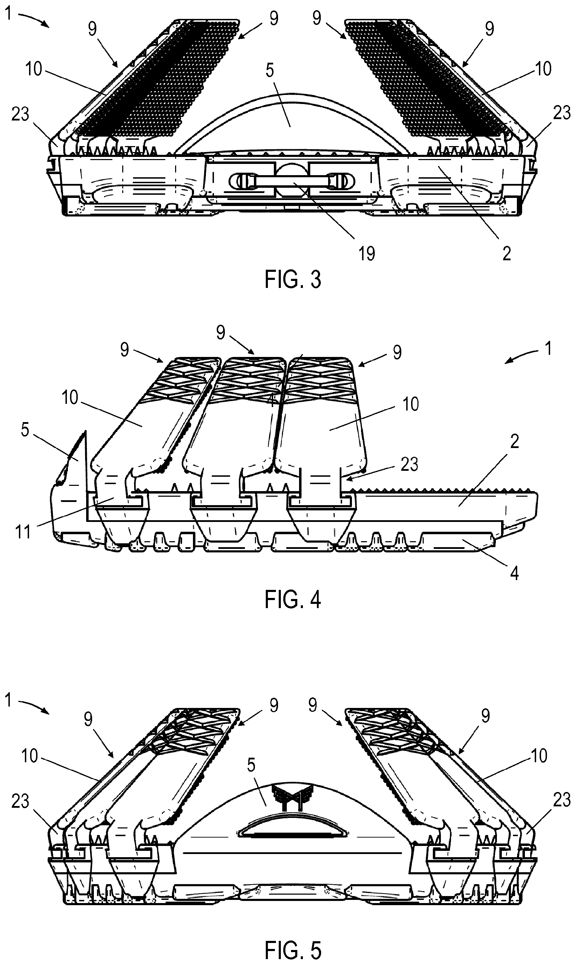

Im Folgenden wird auf die Figuren 1 - 5 Bezug genommen. Ein erfindungsgemäßer Fußschutz 1 ist beispielsweise als Abrieb- und Verletzungsschutz einer Hornkapsel von Einhufern, wie beispielsweise Pferd oder Esel, und Paarhufern, sogenannten Klauentieren wie beispielsweise Rind oder Schaf, vorgesehen. Der Einfachheit halber wird im Folgenden jedoch nur der Begriff "Huf" und alle damit kombinierten Begriffe, wie beispielsweise "Hufsohle", usw., verwendet. Es wird in solchen Fällen jedoch immer auf Hufe und Klauen Bezug genommen. Weiters wird der Begriff "Huf" teilweise stellvertretend für den Begriff "Hornkapsel" verwendet, beziehungsweise umgekehrt.

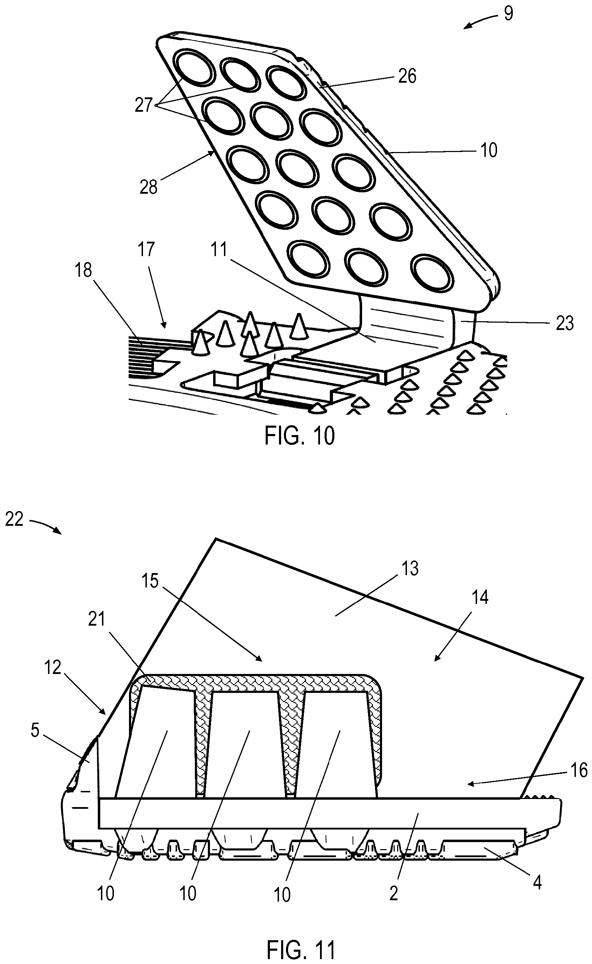

Der Fußschutz 1 weist eine Sohlenplatte 2 auf. Zur Verringerung des Eigengewichts kann die Sohlenplatte 2 eine Ausnehmung 3 aufweisen. Die Sohlenplatte 2 weist auf ihrer unteren, im angelegten Zustand des Fußschutzes 1 von der Hornkapsel abgewandten Seite eine Laufsohle 4 auf. Der Fußschutz 1 weist in seinem vorderen Bereich einen Zehenschutz 5 auf. Der Zehenschutz 5 kommt, gemäß den Figuren 10 - 11, im angelegten Zustand des Fußschutzes 1 an oder nahe einer Zehenwand 12 der Hornkapsel 13 zu liegen. Eine Hornkapselwand 14 der Hornkapsel 13 kann weiters in eine Hornkapselseitenwand 15 und eine Trachtenwand 16 unterteilt werden. In der vorliegenden ersten Ausgestaltung weist die Sohlenplatte 2 in einigen Bereichen auf ihrer, im angelegten Zustand des Fußschutzes 1 der Hornkapsel zugewandten Seite kegelförmige Noppen auf, welche im angelegten Zustand des Fußschutzes 1 die Haftung des Fußschutzes 1 and der Hornkapsel verbessern. Zur Anpassung der Flexibilität des Fußschutzes 1 im beweglichen Teil der Trachten des Hufs, ist im hinteren Bereich der Sohlenplatte 2 ein sogenannter "Spacer" 19 in verschiedenen Härtegraden einschiebbar. So kann die Flexibilität des Fußschutzes 1 individuell an die Bedürfnisse des Tieres angepasst werden.

Der Fußschutz 1 weist sechs Anpasselemente 9 auf. Jedes Anpasselement 9 weist zumindest einen Schenkel 10 und eine Grundplatte 11 auf. Der Schenkel 10 ist über ein Filmscharnier 23 mit der Grundplatte 11 verbunden. Das Filmscharnier 23 wird aus mehreren, im Material eingebrachten Schwächungslinien gebildet, und ermöglicht so ein biegbares Anpassen des Schenkels 10 relativ zur Hornkapselwand 14, sowie ein vereinfachtes Andrücken und Ablösen von der Hornkapselwand 14. Alternativ können der Schenkel 10 und die Grundplatte 11 auch über ein Scharniergelenk verbunden sein, wodurch der Schenkel um die Gelenkachse rotierbar wäre.

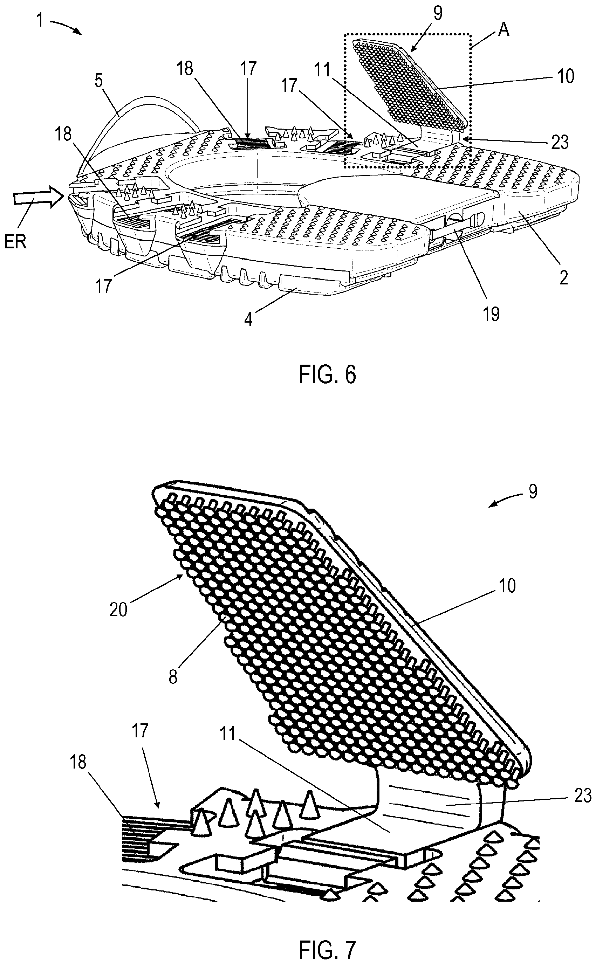

Über die Grundplatte 11 ist jedes Anpasselement 9 mit der Sohlenplatte 2 verbunden. Dabei ist die Grundplatte 11 im Wesentlichen radial, relativ zur Hornkapselwand 14 der Hornkapsel 13 verschiebbar ausgebildet, wodurch die Schenkel 10 relativ zur Hornkapselwand 14 anpassbar sind. Hierbei ist die Grundplatte 11 entlang einer, im Wesentlichen radial zur Hornkapselwand 14 verlaufenden Einschubrichtung ER in eine Sohlenplattenausnehmung 17 der Sohlenplatte 2 einschiebbar und herausziehbar ausgebildet. Figur 6 veranschaulicht dies näher, wobei von den sechs Anpasselementen 9 eines eingeschoben und fünf entfernt dargestellt sind. Figur 7 veranschaulicht das eingeschobene Anpasselement 9 in vergrößerter Ansicht gemäß einem Ausschnitt A aus Figur 6.

Alternativ, aber nicht erfindungsgemäß, könnten die Grundplatten 11 der Anpasselemente 9 auch einteilig mit der Sohlenplatte 2 ausgebildet sein. Die im Wesentlichen radiale Anpassbarkeit der Schenkel 10 relativ zur Hornkapselwand 14 würde dann beispielsweise über ein verlängertes, teilweise faltbares Filmscharnier oder Ähnliches realisiert sein.

Die Grundplatte 11 und die Sohlenplatte 2 weisen an den sich berührenden Oberflächen jeweils komplementäre Oberflächenstrukturen 18, insbesondere Sägezahnstrukturen, auf, die einen Widerstand entgegen der Einschubrichtung ER ausbilden.

Jeder Schenkel 10 weist Haltemittel 8 auf. Diese Haltemittel 8 sind direkt in eine Oberfläche 20 des Schenkels 10 integriert. Diese Oberfläche 20 ist im angelegten Zustand des Fußschutzes 1 der Hornkapselwand 14 zugewandt. Werden nun Befestigungsmittel 21 an der Hornkapselwand 14 angebracht, so liegen sich im angelegten Zustand des Fußschutzes 1 Haltemittel 8 und Befestigungsmittel 21 gegenüber und können miteinander verbunden werden.

Die Anpasselemente 9, welche an den Schenkeln 10 die Haltemittel 8 aufweisen, und die Befestigungsmittel 21, welche an der der Hornkapselwand 14 anbringbar sind, bilden somit das erfindungsgemäße Verschlussverbundsystem 22 zum Befestigen des Fußschutzes 1 an der Hornkapsel 13.

Gemäß der ersten Ausgestaltung des Verschlussverbundsystems 22 weisen die Haltemittel 8 gemäß Figur 7 eine pilzkopfartige Oberflächenstruktur auf. Eine solche Oberflächenstruktur ist kommerziell erhältlich und wird beispielsweise von der Firma "3M™" unter den Markenbezeichnungen "Dual Lock™" und "DuoTec™" vertrieben. Die Befestigungsmittel 21 weisen dieselbe pilzkopfartige Oberflächenstruktur auf. Hierdurch kann durch manuelles oder durch ein Werkzeug, beispielsweise einen Kunststoffroller, unterstütztes Ineinanderstecken der Haltemittel 8 und der Befestigungsmittel 21 eine formschlüssige Verbindung hergestellt werden. Diese Verbindung weist eine besonders hohe Scherfestigkeit auf und kann mit vergleichbar geringem Kraftaufwand im Wesentlichen normal auf die Hornkapselwand 14 manuell wieder gelöst werden. Eine ähnliche Struktur, nämlich eine haken- und schlaufenartige Oberflächenstruktur, bietet die Firma "VELCRO®" unter der Markenbezeichnung "Plastic Hooks" an.

Durch diese Verbindung ist es möglich die Befestigungsmittel 21 ausschließlich an der Hornkapselseitenwand 15 und nicht auch an der Trachtenwand 16 und der Zehenwand 12 anzubringen, was von Vorteil für Tier und Benutzer ist. Alternativ können die Befestigungsmittel 21 zusätzlich oder ausschließlich auch an der Zehenwand 12, der Trachtenwand 16, und/ oder an irgendeinem anderen Teil der Hornkapselwand 14 angebracht werden. Das Anbringen der Befestigungsmittel 21 beziehungsweise des Fußschutzes 1 kann so entsprechend der Hufform des Tieres, der Anwendung des Fußschutzes 1 oder Abhängig von Anzahl und Ausgestaltung der Anpasselemente 9 angepasst werden.

Das Befestigungsmittel 21 kann beispielsweise als einseitiges Klebeband ausgeführt sein, das die formschlüssige Oberflächenstruktur auf der, nicht den Klebstoff aufweisenden Seite aufweist. Das Klebeband wird dann mit der den Klebstoff aufweisenden Seite auf die Hornkapselwand 14 beziehungsweise die Hornkapselseitenwand 15 geklebt.

Alternativ kann die pilzkopfartige Oberflächenstruktur der Haltemittel 8 und der Befestigungsmittel 21 auch als Mikrostruktur, beispielsweise in Form eines "Gecko-Tapes", ausgebildet sein. Weiters kann die Oberflächenstruktur der Haltemittel 8 und der Befestigungsmittel 21 als Haken und Schlaufen oder als "Metallic Velcro" aus Federstahl ausgebildet sein.

Ein typisches Verfahren zum Anbringen des Fußschutzes 1 mit dem erfindungsgemäßen Verschlussverbundsystem 22 kann folgendermaßen aussehen: Es wird ein Fußschutz 1 gewählt, der etwas größer als Huf des Tieres ist, beispielsweise mit einem Durchmesser von etwa 13 Zentimetern. Der Fußschutz 1 wird dann an die Hornkapsel 13 gehalten und gegebenenfalls auf die tatsächliche Größe des Hufs verkleinert. In einem nächsten Schritt wird der Huf mit Alkohol gereinigt, und das Befestigungsmittel 21 an der Hornkapselwand 14 angebracht, beispielsweise aufgeklebt. Dann wird der Fußschutz 1 an die Hornkapsel 13 gehalten und die Anpasselemente 9 werden manuell an die Hornkapselwand 14 geschoben. Sobald die Haltemittel 8 relativ zu den Befestigungsmitteln 21 ausreichend genau ausgerichtet sind, wird die pilzkopfartige Oberflächenstruktur der Haltemittel 8 manuell oder mittels eines Kunststoffrollers in die pilzkopfartige Oberflächenstruktur der Befestigungsmittel 21 gedrückt, und somit die scherfeste Verbindung hergestellt. Nach Gebrauch kann der Fußschutz 1 einfach wieder manuell vom Huf abgenommen werden, wobei die Haltemittel 8 von den Befestigungsmitteln 21 abgezogen werden.

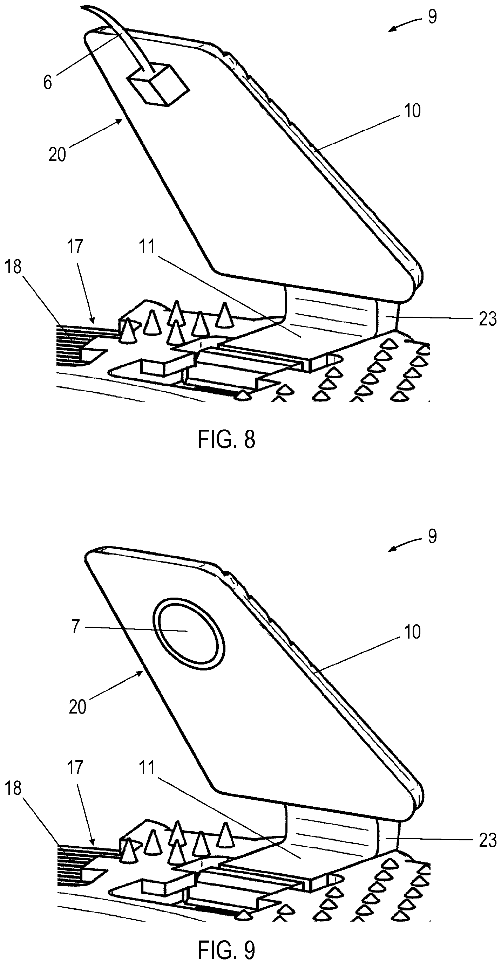

Figur 8 und Figur 11 zeigen entsprechend den Figuren 7 und 11 ein Anpasselement 9 mit Haltemitteln 6 gemäß einer zweiten Ausgestaltung der Erfindung. Hierbei sind die Haltemittel 6 und die Befestigungsmittel 25 als lösbarer Kabelbinderverschluss ausgebildet, wobei das Befestigungsmittel 25 als Kabelbinderkopf und das Haltemittel als Kabelbinderzunge ausgebildet sind. Die Kabelbinderzunge wird dabei beim Anlegen des Fußschutzes 1 einfach manuell in den Kabelbinderkopf eingeschoben und festgezogen. Der Kabelbinderkopf kann an der Hornkapselwand 14 angeklebt oder in ein an die Hornkapselwand 14 aufgeklebtes Gewebeband integriert sein. Vorteil dieser Ausführung ist die Möglichkeit der Vorspannung, was den Spielraum zwischen Hornkapselwand 14 und Fußschutz 1 noch weiter verringern und für Tiere mit drehendem Auffußverhalten wichtig sein kann.

Alternativ könnte die Kabelbinderzunge auch die, beispielsweise an der Hornkapselwand 14 angeklebten Befestigungsmittel 25 ausbilden. Die Anpasselemente 9 könnten einen, in den Schenkel 10 integrierten Kapelbinderkopf aufweisen, durch den die Kabelbinderzunge durchgezogen wird.

Figur 9 zeigt entsprechend Figur 7 ein Anpasselement 9 mit Haltemitteln 7 gemäß einer dritten Ausgestaltung der Erfindung. Hierbei sind die Haltemittel 7 und die Befestigungsmittel als Druckknopfverschluss ausgebildet. Der Druckknopf, der das Haltemittel 7 bildet, wird dabei beim Anlegen des Fußschutzes 1 einfach manuell in das Gegenstück des Druckknopfes, das als Befestigungsmittel an der Hornkapselwand 14 anbringbar ist, eingedrückt.

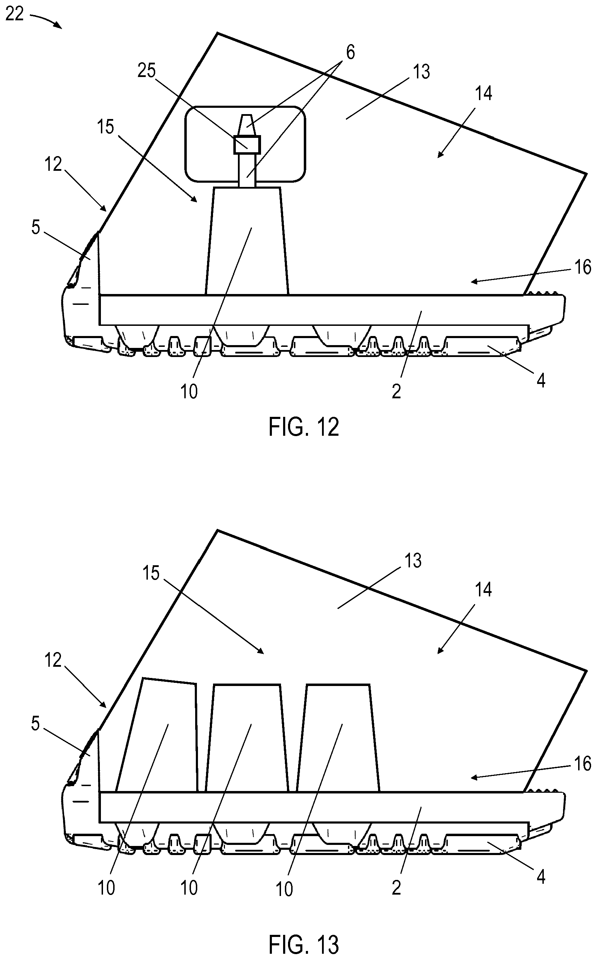

Figur 10 und Figur 13 zeigen entsprechend den Figuren 7 und 11 ein Anpasselement 9 mit Haltemitteln 26 und Befestigungsmitteln 27, die beide am Schenkel 10 angebracht sind, wobei die Haltemittel 26 und die Befestigungsmittel 27 in eine der Hornkapselwand 14 gegenüberliegende Oberfläche 28 des Schenkels 10 integriert sind. Die Haltemittel 26 und Befestigungsmittel 27 können dabei in Form eines Schichtverbundsystems auf den Schenkel 10 aufgebracht sein. Das Haltemittel 26 können beispielsweise als einseitiges Klebeband ausgeführt sein, das die formschlüssige Oberflächenstruktur auf der, nicht den Klebstoff aufweisenden Seite aufweist. Das Klebeband wird dann mit der den Klebstoff aufweisenden Seite auf den Schenkel 10 geklebt und mit den Befestigungsmitteln 27, die an der den Haltemitteln 26 zugewandten Seite eine kompatible Oberflächenstruktur aufweisen, verbunden. Die Befestigungsmittel 27 weisen zusätzlich eine der Hornkapselwand 14 zugewandte Saugnapfstruktur auf. Diese Saugnapfstruktur ist zur Ausbildung einer scherfesten und lösbaren Verbindung mit der Hornkapselwand 14 mittels eines Unterdrucks ausgebildet. Hierdurch lassen sich die Befestigungsmittel 27 direkt an der Hornkapselwand 14 befestigen. Es muss hierbei nach Ablösen des Hufschutzes 1 das Befestigungsmittel 27 nicht an der Hornkapsel 13 verbleiben. Entscheidend bei dieser Ausgestaltung ist, dass die Verbindung zwischen Befestigungsmittel 27 und Haltemittel 26 stärker ist als die Verbindung zwischen Befestigungsmittel 27 und Hornkapselwand 14, sodass die Befestigungsmittel 27 problemlos von der Hornkapsel 13 zu lösen sind.

Die Befestigungsmittel 27 und die Haltemittel 26 können alternativ, aber nicht erfindungsgemäß, auch fest miteinander verklebt oder sogar einteilig ausgebildet sein, da der Hufschutz 1 in diesem Fall weiterhin lösbar verbindbar ausgebildet ist und so die technische Wirkung nicht beeinträchtigt ist. Alternativ weisen die Befestigungsmittel 27 eine der Hornkapselwand 14 zugewandte Mikrostruktur, beispielsweise eine Gecko-Struktur, auf, die zur Ausbildung einer scherfesten und lösbaren Verbindung mit der Hornkapselwand 14 ausgebildet ist.

Vorteilhafterweise besteht die Sohlenplatte 2 aus einem besonders widerstandsfähigen, harten Material mit geringer Dichte, beispielsweise Aluminium, Kunststoff, wie beispielsweise Polyethylen (PE) oder Polypropylen (PP), besonders vorteilhafterweise aus einem besonders widerstandsfähigen, harten Material mit besonders geringer Dichte, beispielsweise Carbon.

Vorteilhafterweise besteht die Laufsohle 4 aus einem widerstandsfähigen Material mit guten stoßdämpfenden Eigenschaften, beispielsweise Kunststoff, wie beispielsweise Ethylenvinylacetat (EVA), oder Gummi.

Vorteilhafterweise kann der Zehenschutz 5 zu Sicherheitszwecken, beispielsweise mittels eines angebrachten, Licht reflektierenden passiven Rückstrahlelements, zu Informationszwecken, beispielsweise mittels eines angebrachten Namens des Tieres oder einer Kennzahl, oder zu Vermarktungszwecken, beispielsweise mittels eines angebrachten Emblems, genutzt werden.

Vorteilhafterweise können die Haltemittel 8, durch Beaufschlagung einer zusätzlichen, im Wesentlichen radial auf die Hornkapselwand 14 einwirkenden Kraft, zusätzlich auch kraftschlüssig mit den Befestigungsmitteln 21 verbunden werden. Hierzu kann beispielsweise eine zusätzlich Verschraubung dienen.

Bei allen Ausgestaltungen der Erfindung können die Befestigungsmittel für die Hornkapselwand beschädigungsfrei an der Hornkapselwand befestigt werden. Es erfolgt somit kein Eindringen eines Nagels oder einer Schraube in die Hornkapselwand, die die Hornkapselwand beschädigen würde. Dies verbessert die Haltbarkeit und Gesundheit der Tiere bezüglich ihrer Hufe oder Klauen.

## Patentansprüche

1. Verschlussverbundsystem (22) zum Befestigen eines Fußschutzes (1) an einer Hornkapsel (13) eines Tieres mit Befestigungsmitteln (21, 25, 27), die an einer Hornkapselwand (14) der Hornkapsel (13) anbringbar sind, und mit Haltemitteln (6-8, 26), die am Fußschutz (1) angebracht sind, **dadurch gekennzeichnet,**
**dass** der Fußschutz (1) eine Sohlenplatte (2) und zumindest zwei Anpasselemente (9) mit jeweils zumindest einem Schenkel (10) und einer Grundplatte (11) aufweist, wobei jeder Schenkel (10) mittels der Grundplatte (11), die in einer, nach oben offenen Sohlenplattenausnehmung (17) der Sohlenplatte (2) verschiebbar und von der Sohlenplatte (2) lösbar ausgebildet ist, im Wesentlichen radial, relativ zur Hornkapselwand (14) verschiebbar ausgebildet ist und eines der Haltemittel (6-8, 26) aufweist, die mit den Befestigungsmitteln (21, 25, 27) scherfest und lösbar verbindbar ausgebildet sind.

2. Verschlussverbundsystem (22) nach Anspruch 1, **dadurch gekennzeichnet, dass** die Haltemittel (8) und/oder die Befestigungsmittel (21) eine formschlüssige Oberflächenstruktur, vorzugsweise eine pilzkopfartige oder eine haken- und schlaufenartige Oberflächenstruktur, aufweisen.

3. Verschlussverbundsystem (22) nach Anspruch 1 oder 2, **dadurch gekennzeichnet, dass** die Haltemittel (8) in eine den Befestigungsmitteln (21) gegenüberliegende Oberfläche (20) der Schenkel (10) integriert ausgebildet sind.

4. Verschlussverbundsystem (22) nach Anspruch 1, **dadurch gekennzeichnet, dass** die Haltemittel (8) und/oder die Befestigungsmittel (21) aus einem Band, vorzugsweise einem einseitigen Klebeband, das die formschlüssige Oberflächenstruktur aufweist, ausgebildet sind.

5. Verschlussverbundsystem (22) nach Anspruch 2 oder 4, **dadurch gekennzeichnet, dass** die Oberflächenstruktur als Mikrostruktur ausgebildet ist.

6. Verschlussverbundsystem (22) nach Anspruch 1, **dadurch gekennzeichnet, dass** die Haltemittel (7) und die Befestigungsmittel als formschlüssige Einrastverbindung, vorzugsweise als Druckknopfverschluss oder als Druckverschlussschiene oder in Form einer Steck- oder Verschlussschnalle, ausgebildet sind.

7. Verschlussverbundsystem (22) nach Anspruch 1, **dadurch gekennzeichnet, dass** die Haltemittel (6) und die Befestigungsmittel (25) als lösbarer Kabelbinderverschluss ausgebildet sind, wobei vorzugsweise das Befestigungsmittel (25) als Kabelbinderkopf und das Haltemittel (6) als Kabelbinderzunge ausgebildet sind.

8. Verschlussverbundsystem (22) nach Anspruch 1, **dadurch gekennzeichnet, dass** die Haltemittel (26) und die Befestigungsmittel (27) am Schenkel (10) angebracht sind, wobei die Befestigungsmittel (27) eine der Hornkapselwand (14) zugewandte Saugnapfstruktur oder Mikrostruktur aufweisen, die zur Ausbildung einer scherfesten und lösbaren Verbindung mit der Hornkapselwand (14) ausgebildet ist, wobei die Verbindung zwischen Befestigungsmittel (27) und Haltemittel (26) stärker ist als die Verbindung zwischen Befestigungsmittel (27) und Hornkapselwand (14).

9. Verschlussverbundsystem (22) nach Anspruch 8, **dadurch gekennzeichnet, dass** die Haltemittel (26) und die Befestigungsmittel (27) in eine der Hornkapselwand (14) gegenüberliegende Oberfläche (28) der Schenkel (10) integriert ausgebildet sind.

10. Verschlussverbundsystem (22) nach einem der Ansprüche 1 bis 9, **dadurch gekennzeichnet, dass** die Anpasselemente (9) und/oder der Fußschutz (1) zumindest teilweise aus Metall, insbesondere rostfreier Leichtbaustahl oder Aluminium, Gummi, Kunststoff, faserverstärktem Kunststoff oder aus Carbon, besteht oder bestehen.

11. Verschlussverbundsystem (22) nach einem der Ansprüche 1 bis 10, **dadurch gekennzeichnet, dass** die Befestigungsmittel (21, 25, 27) ausschließlich an einer Hornkapselseitenwand (15) der Hornkapsel (13) angebracht sind.

12. Verschlussverbundsystem (22) nach einem der Ansprüche 2 bis 11, **dadurch gekennzeichnet, dass** die Schenkel (10) der Anpasselemente (9) über ein Scharniergelenk oder ein Filmscharnier (23) mit dem Fußschutz (1) oder der Grundplatte (11) der Anpasselemente (9) biegbar verbunden sind.

13. Fußschutz (1) für Hufe oder Klauen eines Tieres, **dadurch gekennzeichnet, dass** ein Verschlussverbundsystem (22) nach einem der Ansprüche 1 bis 12 vorgesehen ist.

## Claims

1. A closure assembly system (22) for attaching a foot protection (1) to a horn capsule (13) of an animal by means of attachment means (21, 25, 27), which may be secured to a horn capsule wall (14) of the horn capsule (13), and holding means (6-8, 26), which are secured to the foot protection (1), **characterized in that**
the foot protection (1) has a sole plate (2) and at least two adaption elements (9) each having at least one leg (10) and a base plate (11), wherein each leg (10) is configured to be slidable by means of the base plate (11), which is configured to be slidable in a sole plate recess (17) of the sole plate (2) that is open towards the topside and to be detachable from the sole plate (2), essentially radially relative to the horn capsule wall (14) and has one of the holding means (6-8, 26), which are configured to be safe against sliding with the attachment means (21, 25, 27) and connectable therewith in a detachable way.

2. A closure assembly system (22) according to claim 1, **characterized in that** the holding means (8) and/or the attachment means (21) have a form-fit surface structure, preferably a mushroom head-like or a hook-like and a loop-like surface structure.

3. A closure assembly system (22) according to claim 1 or 2 **characterized in that** the holding means (8) are configured to be integral with a surface (20) of the legs (10) that is opposite to the attachment means (21).

4. A closure assembly system (22) according to claim 1, **characterized in that** the holding means (8) and/or the attachment means (21) are composed of a tape, preferably a one-sided adhesive tape having the form-fit surface structure.

5. A closure assembly system (22) according to claim 2 or 4, **characterized in that** the surface structure is configured as a micro-structure.

6. A closure assembly system (22) according to claim 1, **characterized in that** the holding means (7) and the attachment means are configured as form-fit engagement connection, preferably as a snap-fastener closure or as a pressure cap brace or in the form of a press-lock or closure buckle.

7. A closure assembly system (22) according to claim 1, **characterized in that** the holding means (6) and the attachment means (25) are configured as a detachable cable tie closure, wherein preferably the attachment means (25) are configured as a cable tie head and the holding means (6) as a cable tie tab.

8. A assembly closure system (22) according to claim 1, **characterized in that** the holding means (26) and the attachment means (27) are secured to the leg (10), wherein the attachment means (27) have a suction cup structure or micro-structure facing the horn capsule wall (14), which is configured to form a connection with the horn capsule wall (14) that is safe against sliding and that may be detached, wherein the connection between attachment means (27) and holding means (26) is stronger than the connection between attachment means (27) and horn capsule wall (14).

9. A closure assembly system (22) according to claim 8, **characterized in that** the holding means (26) and the attachment means (27) are configured to be integral with a surface (28) of the legs (10) that is opposite to the horn capsule wall (14).

10. A closure assembly system (22) according to any of claims 1 to 9, **characterized in that** the adjustment members (9) and/or the foot protection (1) are made at least in part from metal, in particular stainless lightweight steel, or aluminium, rubber, plastics, fibre-reinforced plastics or carbon.

11. A closure assembly system (22) according to any of claims 1 to 10, **characterized in that** the attachment means (21, 25, 27) are exclusively secured to a horn capsule wall (15) of the horn capsule (13).

12. A closure assembly system (22) according to any of claims 2 to 11, **characterized in that** the legs (10) of the adjustment members (9) are bendably connected with the foot protection (1) or the base plate (11) of the adjustment members (9) via a joint or a living hinge (23).

13. A foot protection (1) for the hooves or claws of an animal, **characterized in that** there is provided a closure assembly system (22) according to any of claims 1 to 12.

## Revendications

1. Système composite de fermeture (22) pour la fixation d'une protection de pied (1) sur une enveloppe de sabot (13) d'un animal avec des moyens de fixation (21, 25, 27), qui peuvent être placés sur une paroi d'enveloppe de sabot (14) de l'enveloppe de sabot (13), et avec des moyens de maintien (6-8, 26), qui sont placés sur la protection de pied (1), **caractérisé en ce que** la protection de pied (1) présente une plaque de semelle (2) et au moins deux éléments d'adaptation (9) avec chaque fois au moins une branche (10) et une plaque de base (11), dans lequel chaque branche (10) est réalisée au moyen de la plaque de base (11), qui est réalisée sous forme coulissante dans un évidement de plaque de semelle (17) ouvert vers le haut de la plaque de semelle (2) et sous forme séparable de la plaque de semelle (2), de façon coulissante essentiellement radialement par rapport à la paroi d'enveloppe de sabot (14) et présente l'un des moyens de maintien (6-8, 26), qui sont réalisés sous une forme pouvant être assemblée aux moyens de fixation (21, 25, 27) de façon résistante au cisaillement et séparable.

2. Système composite de fermeture (22) selon la revendication 1, **caractérisé en ce que** les moyens de maintien (8) et/ou les moyens de fixation (21) présentent une structure de surface à emboîtement, de préférence une structure de surface en forme de champignon ou en forme de crochets et de boucles.

3. Système composite de fermeture (22) selon la revendication 1 ou 2, **caractérisé en ce que** les moyens de maintien (8) sont réalisés sous forme intégrée dans une surface (20) des branches (10) opposée aux moyens de fixation (21).

4. Système composite de fermeture (22) selon la revendication 1, **caractérisé en ce que** les moyens de maintien (8) et/ou les moyens de fixation (21) sont formés en une bande, de préférence une bande adhésive sur un côté, qui présente la structure de surface à emboîtement.

5. Système composite de fermeture (22) selon la revendication 2 ou 4, **caractérisé en ce que** la structure de surface est formée par une microstructure.

6. Système composite de fermeture (22) selon la revendication 1, **caractérisé en ce que** les moyens de maintien (7) et les moyens de fixation sont réalisés sous forme d'assemblage par encliquetage à emboîtement, de préférence sous forme de fermeture à boutons-pression ou sous forme de rail de fermeture à pression ou sous la forme d'une sangle à boucle et verrou.

7. Système composite de fermeture (22) selon la revendication 1, **caractérisé en ce que** les moyens de maintien (6) et les moyens de fixation (25) sont formés par une fermeture séparable par ligature à câble, dans lequel, de préférence, le moyen de fixation (25) est formé par une tête de ligature à câble et le moyen de maintien (6) par une patte de ligature à câble.

8. Système composite de fermeture (22) selon la revendication 1, **caractérisé en ce que** les moyens de maintien (26) et les moyens de fixation (27) sont placés sur la branche (10), dans lequel les moyens de fixation (27) présentent une structure à ventouses ou une microstructure tournée vers la paroi d'enveloppe de sabot (14), qui est réalisée de façon à former un assemblage résistant au cisaillement et séparable avec la paroi d'enveloppe de sabot (14), dans lequel la liaison entre le moyen de fixation (27) et le moyen de maintien (26) est plus forte que l'assemblage entre le moyen de fixation (27) et la paroi d'enveloppe de sabot (14).

9. Système composite de fermeture (22) selon la revendication 8, **caractérisé en ce que** les moyens de maintien (26) et les moyens de fixation (27) sont réalisés sous forme intégrée dans une surface de la branche (10) opposée à la paroi d'enveloppe de sabot (14).

10. Système composite de fermeture (22) selon l'une quelconque des revendications 1 à 9, **caractérisé en ce que** les éléments d'adaptation (9) et/ou la protection de pied (1) est/sont constitué(s) au moins en partie de métal, en particulier d'acier inoxydable de construction légère ou d'aluminium, de caoutchouc, de matière plastique, de matière plastique renforcée par des fibres ou de carbone.

11. Système composite de fermeture (22) selon l'une quelconque des revendications 1 à 10, **caractérisé en ce que** les moyens de fixation (21, 25, 27) sont placés exclusivement sur une paroi d'enveloppe de sabot (15) de l'enveloppe de sabot (13).

12. Système composite de fermeture (22) selon l'une quelconque des revendications 2 à 11, **caractérisé en ce que** les branches (10) des éléments d'adaptation (9) sont reliées de façon flexible par une articulation à charnière ou une charnière pelliculaire (23) à la protection de pied (1) ou à la plaque de base (11) des éléments d'adaptation (9).

13. Protection de pied (1) pour des sabots ou des griffes d'un animal, **caractérisée en ce qu'**il est prévu un système composite de fermeture (22) selon l'une quelconque des revendications 1 à 12.
